Europäisches Patentamt

European Patent Office

Office européen des brevets

(11) Publication number: **0 654 937 A2**

# EUROPEAN PATENT APPLICATION

(21) Application number: **94307944.2**

(22) Date of filing: **27.10.94**

(51) Int. Cl.⁶: **H04N 1/40**

(30) Priority: **19.11.93 US 155727**

(43) Date of publication of application:
**24.05.95 Bulletin 95/21**

(84) Designated Contracting States:
**DE FR GB**

(71) Applicant: **XEROX CORPORATION**
**Xerox Square**
**Rochester**
**New York 14644 (US)**

(72) Inventor: **Curry, Douglas N.**
**221 Leland Avenue**
**Menlo Park, CA 94025 (US)**

(74) Representative: **Reynolds, Julian David et al**
**Rank Xerox Ltd**
**Patent Department**
**Parkway**
**Marlow**
**Buckinghamshire SL7 1YL (GB)**

(54) **Variable resolution processing in a hyperacuity printer.**

(57) An image processing system for processing variable resolution data. The image data system includes a data source (51) for supplying image data and associated mode information wherein the mode information controls variable resolutions of the image data when processed. The system further includes a memory device (58) for receiving and storing the image data and the associated mode information in a packed format according to the associated mode information; and a mode selection device (200) for receiving the image data and the associated mode information from the memory device (58) and for unpacking the image data in response to the mode information.

**Fig. 8**

This invention relates to variable resolution image processing, and more particularly, to variable resolution image processing in a hyperacuity printer.

Gray or multi-bit per pixel image data to be printed can be sent to image rendering hardware like that of a raster output scanner (ROS) for printing latent electrostatic images on xerographic photoreceptors. Such a system is shown US-A 5,138,339, which is hereby incorporated by reference The image data may be viewed as three dimensional data in that it has two dimensions of resolution, such as fastscan and slowscan pixel per inch resolution, and one dimension of gray, such as provided by the multi-bit per pixel gray value (bits per pixel). As such, this may be viewed as a particular aspect ratio, such as 300 by 300 (resolution) by 8 (eight bits per pixel), or 600 by 600 by 2, for instance.

Each aspect ratio of data has advantages and disadvantages in terms of its ability to deliver fidelity. For instance, the 300 by 300 by 8 aspect ratio data may be desired for pictorials, because of its 256 values of gray which are defined by the eight bits per pixel, but has a disadvantage of low resolution in that it can only define 300 lines per inch. However, a higher resolution often is not required for printing pictorials. On the other hand, the 600 by 600 by 2 aspect ratio data might be good for rendering small text, because higher resolution is desirable. The ability to define the edges of this small text is not as important since the text is very tiny and edge mistakes may be more difficult to see in relationship to the inherent noise. Therefore, using only 2 bits of gray depth, which will be later used to render the edge of the text, could be sufficient at the higher resolution.

Another example of better transfer of fidelity can depend on orientation, such as when more or less vertical (perpendicular to fast scan direction) or more or less horizontal (parallel to fast scan direction) lines are being transferred. Using an aspect ratio which is tuned to the fast scan orientation (such as 240 pixels per inch (ppi) (slowscan) by 480 ppi (fastscan) by 2 bits per pixel of gray) or slow scan orientation (such as 480 ppi (slowscan) by 240 ppi (fastscan) by 2 bits per pixel of gray), or , could efficiently deliver enhanced fidelity for vertical or horizontal edges respectively without sacrificing the use of a larger memory.

It can be appreciated that fidelity can be transferred to a printer with many different aspect ratios. However, there are some aspect ratios which naturally can be grouped together since the number of bits per square inch remains constant, such as 300x300x8 and 600x600x2. Other similar aspect ratios might be 240 by 240 by 8 and 480 by 480 by 2 and 480 by 240 by 4 for example. Also, it could be possible to redefine the purpose of some of the bits in this data transfer from representing a gray multi-bit value and reestablishing its meaning as a bit which determines the resolution at which the multi-bit value associated with it is to be rendered. For example, 300 by 300 by 8 could become 300 by 300 by 7 with the extra bit determining whether to render at 300 by 300 by 7 or an alternate aspect ratio, for instance 600 by 300 by 3. Finally, an extra bit could also be used to determine the orientation at which to render, such as 600 by 300 by 3 or 300 by 600 by 3.

Therefore, given the above examples, it would be desirable to print an image with different aspect ratios embedded in the same image. Printing data with different aspect ratios would include printing data having different resolutions in both the fast and slow scan directions and different gray depths. Such a system could require only one image buffer and only one clock frequency reference from the image generator, since the number of bits per square inch remains constant It could also make full use of the data bandwidth and storage capabilities of the image generator since it can more efficiently store fidelity information within the confines of the given image buffer.

In accordance with the present invention, provided is an image processing system for processing variable resolution data. The system includes a data source for supplying image data and associated mode information wherein the mode information controls variable resolutions of the image data when processed; memory device for receiving and storing the image data and the associated mode information in a packed format according to the associated mode information; and mode selection device for receiving the image data and the associated mode information from the memory device and for unpacking the image data in response to the mode information.

Preferably, the transformation circuitry further includes a two dimensional interpolator coupled between said mode selector and said thresholder and said halftoner, said two dimensional interpolator supplying interpolated grayscale input image data values to said thresholder and said halftoner.

Preferably, the two dimensional interpolator also supplies slope information for said interpolated grayscale input image values.

The printing system preferably further includes a linearity and registration controller for providing error correction values to said halftoner, and/or to said two dimensional interpolator. Preferably, the mode selector provides first data to said thresholder and second data to said halftoner, said first data being at a higher resolution than said second data.

Embodiments of the invention will now be described, by way of example, with reference to the accompanying drawings, in which:

Figure 1 is a simplified schematic diagram of a xerographic printer that is equipped to carry out the present invention;

Figure 2 is a block diagram of a single channel hyperacuity imager subsystem;

Figure 3 is a diagram of a two channel hyperacuity imager subsystem;

Figure 4 is a block diagram depicting the elements included in the FIFO and phase/resolution controller shown in Figures 2 and 3;

Figure 5 is a block diagram depicting the elements included in the gray interlace formatter shown in Figure 3;

Figure 6 is a block diagram depicting the elements included in the resampling interpolator and the phase/resolution controller shown in Figures 2 and 3;

Figure 7 is a block diagram depicting the elements included in the y interpolator, x interpolator and slope interpolator shown in figure 6;

Figure 8 is a block diagram of a modified single channel hyperacuity imager subsystem including a mode selector in accordance with the present invention;

Figure 9 is a graphical representation of five modes in which data can be stored and used in accordance with the present invention;

Figure 10 is a block diagram showing the interrelationships between the FIFO, the segmenter, the mode selector, the x accumulator register of the phase/resolution controller, and the resampling interpolator;

Figure 11 is a detailed block diagram showing elements included in mode selection circuitry;

Figure 12 is a detailed block diagram showing more elements included in the mode selection circuitry;

Figure 13 is a detailed block diagram showing the relationship between the x accumulator register and a shifter which is part of the mode selector;

Figure 14 is a block diagram of the elements used to provide 2-D dual mode selection;

Figure 15 is an exemplary representation of pixel packing in 2-D dual mode mixed with pixels packed in byte mode;

Figure 16 is a graphical representation of three additional modes in which data can be stored and used in accordance with the present invention;

Figure 17 is a block diagram including elements used to provide the modes shown in Figure 16; and,

Figure 18 is a block diagram depicting the relationship between the FIFO addressing circuitry and they accumulator register for providing the modes shown in Figure 16.

## I. SYSTEM OVERVIEW

### 1.0 Typical ROS System

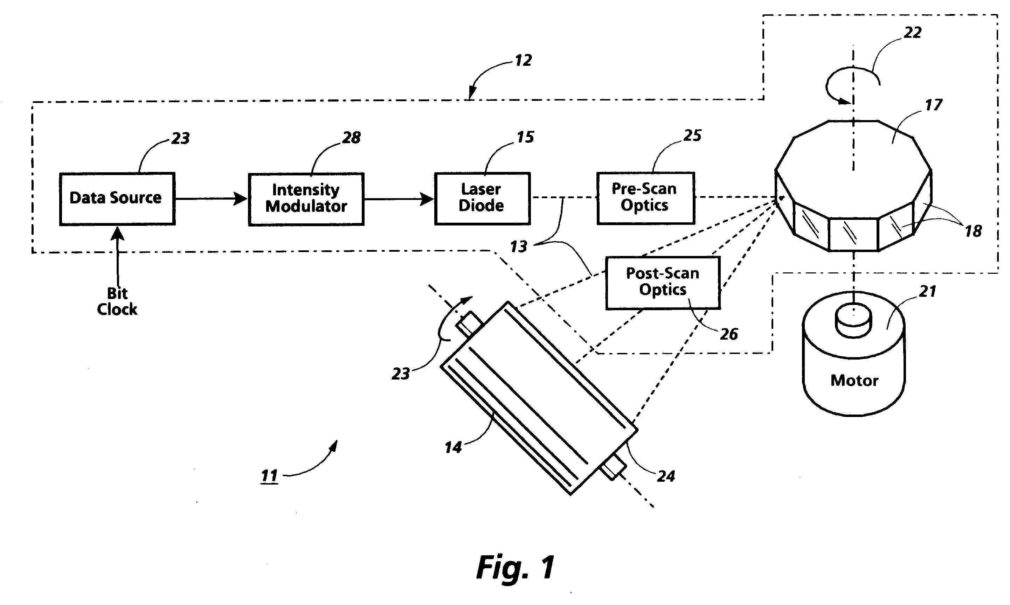

Turning now to the drawings, and at this point especially to Fig. 1, there is a xerographic print engine 11 (shown only in relevant part) having a more or less conventionally configured flying spot ROS 12 for scanning a data modulated light beam 13 over a xerographic photoreceptor 14 in accordance with a predetermined raster scanning pattern. To that end, the ROS 12 comprises a laser diode 15 for emitting the light beam 13 in the visible or invisible (e.g., infrared) band of the spectrum, together with a polygon scanner 17 that has a plurality of nearly identical, mirror-like exterior sidewalls or "facets" 18.

In keeping with standard practices, there is a motor 21 for rotating the scanner 17 about its central axis, as indicated by the arrow 22, at a substantially constant angular velocity. The scanner 17 is optically aligned between the laser 15 and the photoreceptor 14, so its rotation causes the laser beam 13 to be intercepted by and reflected from one after another of the scanner facets 18, with the result that the beam 13 is cyclically swept across the photoreceptor 14 in a fastscan direction. The photoreceptor 14, on the other hand, is advanced (by means not shown) simultaneously in an orthogonal, process direction at a substantially constant linear velocity, as indicated by the arrow 23, so the laser beam 13 scans the photoreceptor 14 in accordance with a raster scan pattern As shown, the photoreceptor 14 is coated on a rotating drum 24, but it will be apparent that it also could be carried by a belt or any other suitable substrate.

Typically, the ROS 12 additionally includes pre-scan optics 25 and post-scan optics 26 for bringing the laser beam 13 to a generally circular focus proximate the photoreceptor 14 and for providing any optical correction that may be needed to compensate for scanner wobble and other optical irregularities. Preferably, the optical aperture of the ROS 12 is sufficiently large to avoid excessive truncation of the laser beam 13 because the beam 13 then comes to a generally circular or elliptical focus with a gaussian intensity profile. However, the broader aspects of this invention are not limited to any specific scan spot geometry or intensity profile. Accepted design principles indicate that the spatial frequency power spectrum of the scan spot profile should not have significant spatial frequency components outside the spatial frequency passband of the imaging system, but the scan spot can otherwise be tailored to satisfy a variety of system requirements.

To carry out the present invention, the amplitude, duty cycle, and/or pulse width of the laser beam 13 is serially modulated (collectively referred to herein as its "intensity modulation") by intensity modulator 28 in accordance with successive multi-bit digital data values. These data values are clocked out of a buffered data source 23 serially in response to data clock pulses which are time synchronized with the scan of the scan spot from bitmap location-to-bitmap location within the raster scan pattern. Thus, the data clock frequency can be selected (by means not shown) to map the data onto tie raster scan pattern at any desired resolution, using either the same or different resolutions in the fastscan and the process directions. As will be appreciated, the data may be preprocessed (such as by means herein described) for the printing of halftoned images and/or text and other types of line art, so the data source 23 generically represents any suitable source of gray scale data for intensity modulating the laser beam 13.

As is known, the fastscan pixel positioning precision of the print engine 11 can be enhanced, if desired, by dynamically adjusting the frequency of the data clock to compensate for the pixel positioning errors that tend to be caused by "motor hunt" (i. e., variations in the angular velocity of the scanner 17), "polygon signature" characteristics (variations in the angular velocities at which the different facets 18 of the scanner 17 sweep the scan spot across the photoreceptor 14 from a start of scan position to an end of scan position), and "scan non-linearities" (i. e., localized variations in the linear velocity of the fastscan, which are caused by variances in the geometric relationship of the scanner 17 to spatially distinct segments of any given scanline). For more information on these sources of potential pixel positioning errors and the compensation that can be provided for those errors, reference is made to the following documents: US-A-4,622,593; US-A-4,639,789; US-A-4,766,560; US-A-4,860,237; US-A-4,893,136; and US-A-4,935,891.

It is to be understood, however, that the increased pixel positioning precision of the existing compensation techniques listed above, strictly pertain to the spatial positioning of the pixel centers in the fastscan direction Thus timing is used to adjust the fastscan pixel positions. This differs from the two dimensional "high addressability" or "microaddressability" utilized herein because microaddressability enables image transitions to be spatially positioned with subresolution precision in both the process direction and the fastscan direction. This feature sometimes is referred to as "two dimensional high addressability" or, in abbreviated form, as "2D high addressability" and is fully described in US-A-5, 138,339. Typically, intensity is used to adjust the pixel positions in the process direction.

In particular, according to US-A-5,138,339 which can be utilized by the present invention, the pitch of the scan pattern for the printer 11 is selected to be significantly finer (i. e., smaller) than the FWHM (full width half max) diameter of the scan spot that is formed from the scan beam 13. This relatively fine pitch scan pattern causes the printer 11 to operate in an "overscanned" mode because the FWHM central core of the scan spot sweeps across spatially overlapping segments of the photoreceptor 14 during the scanning of spatially adjacent (i. e., neighboring) scanlines. Overscanning slightly degrades the spatial frequency response of the printer 11 in the process direction. However, it has been found that the linearity of the addressability response of ROS printers, such as the printer 11, increases rapidly as the ratio of the scan pitch to the FWHM diameter of the scan spot is reduced to progressively smaller, subunity values (i. e., increasing the overscan). In other words, it has been found that overscanning is the key to providing the essentially linear position control that enables discrete exposures to map image transitions onto a scan pattern at a subresolution precision. Thus, in the printer shown in Fig. 1, a relatively small loss of process direction frequency response is accepted to achieve substantially increased process direction addressability. The use of an overscan factor (i. e., the ratio of the FWHM diameter of the scan spot to the scan pitch) in excess of about 2x only marginally improves the linearity of the addressability response of the printer 11, so designers contemplating the use of overscan factors greater than 2x or so should carefully analyze the overall performance of the system that is being designed to ensure that it is satisfactory.

The reason that it is important to adjust the pixel positions with subpixel or subscan precision in both the fastscan and process directions is because of the ability of the human visual system to perceive edge placement precision from 10 to 60 times more precisely than the acuity (resolution) of the visual system. This ability of the human visual system is referred to as hyperacuity. Thus, the resolving power of the printer need extend just beyond the visual system's acuity cutoff of around 300 to 400 lines per inch at a twelve inch view distance, the hyperacuity response of the printer needs to be able to position the edges of these relatively coarse marks with a precision of from 3,000 to 20,000 positions per inch. It is not practical to implement high speed printers with resolutions of 3,000 to 20,000 pixels per inch, so the alternative is to make a scanner with similar characteristics as the human visual system: its hyperacuity response is an order of magnitude or more greater than its own resolution. The linearity provided by overscanning enables this performance.

It then becomes necessary to provide this scanner with enough fidelity information to drive it. Bitmaps, which are usually used, are a poor source, because they do not efficiently store hyperacuity information. The information is best provided by gray source data, which can have a limited resolution of 300 to 400 samples per inch, for instance, and a gray depth of perhaps 8 bits, which is logarithmically encoded to achieve 256 levels, which provides the hyperacuity information. This data can be converted in real time with the electronics herein described to produce the high bandwidth gray data destined for the photoreceptor or media. Thus, this information, which amounts to the equivalent of over 23 million bits per square inch (at 4800 x 4800 addressability units per inch, for instance), is used only on the photoreceptor or media, not stored in an expensive page buffer.

## 2.0 Hyperacuity Printer Architecture

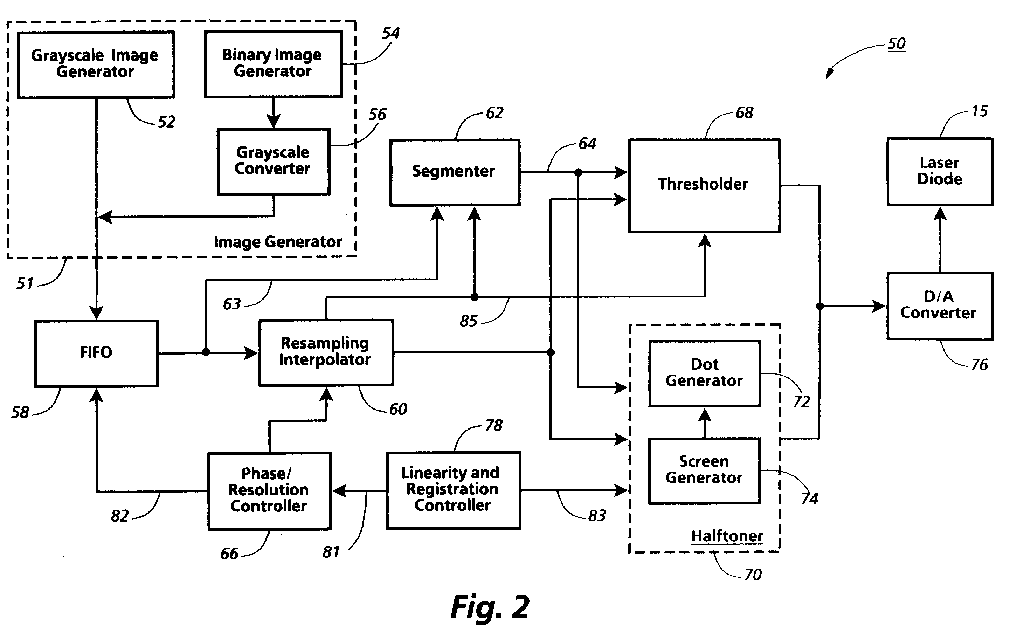

High quality printing not only depends on machine noise and exposure quality, but on how much fidelity information can be passed on to the printer from the data source. It is the purpose of the electronics in the printer to convert high fidelity, sampled representation into a high bandwidth, high resolution bit stream for delivery to the photoreceptor. Figure 2 shows a block diagram of the subsystem components in a hyperacuity printing system, referred to herein as printer 50, in accordance with the present invention. Printer 50 can be implemented like the xerographic print engine 11 of Figure 1, however, it is not intended to be limited to such a print engine configuration.

Printer 50 includes data sources from Image Generator 51 including Grayscale Image Generator 52, Binary Image Generator 54, and Grayscale Converter 56. Further included are FIFO (First In First Out) memory 58, Resampling Interpolator 60, segmenter 62, Phase/Resolution Controller 66, halftoner 70, D to A converter 76, laser diode 15, and Linearity and Registration Controller 78. The resampling interpolator 60, halftoner 70, thresholder 68 and digital to analog converter 76 are responsible for the conversion of the sampled representation into a high bandwidth, high resolution bitstream for delivery to the photoreceptor via laser diode 15.

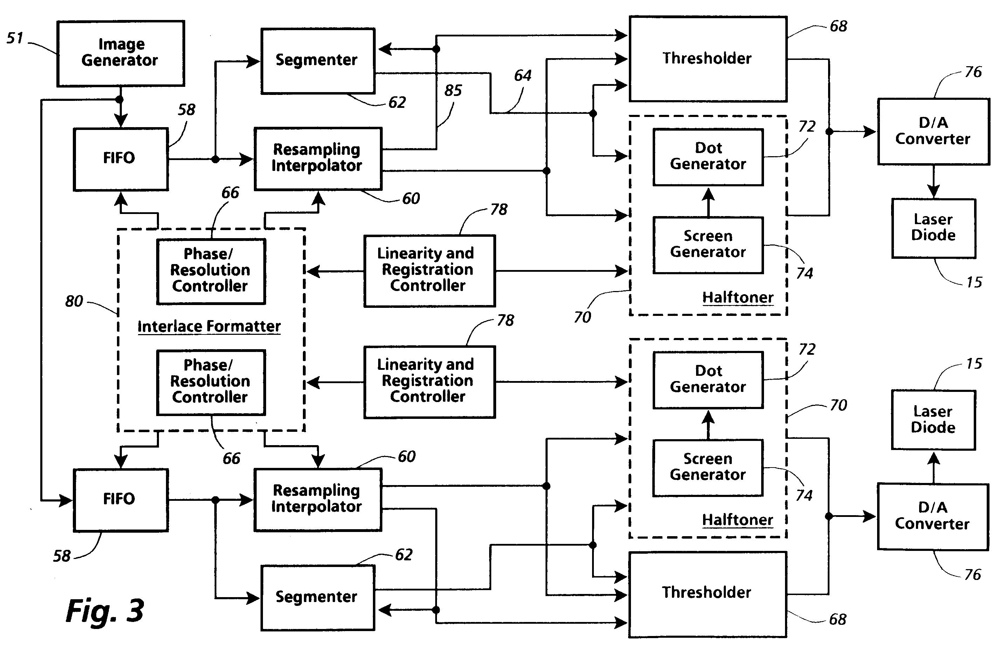

Figure 3 is a block diagram of a two channel hyperacuity printer whereby the printer has two laser diodes. Note that the system of Figure 3 includes the same elements as the system shown in Figure 2, with the addition of interlace formatter 80. Printer 50 will be generally described below, with detailed descriptions of each subsystem component following the general description.

The image generator used in the printing system can be binary or gray, and is not restricted to a specific resolution or gray (multi-bit) depth. In general, gray depth over an image can be variable to accommodate a physical interface with the imager subsystem or to adjust the fidelity of image information sent to the printer, while sample density (the number of samples per inch) will be adjustable up to some maximum to match the resolution goal of the imager. As shown in Figure 2, image data may be provided by grayscale image generator 52 which provides multiple bit per pixel data to FIFO 58. Or, image data may be provided in binary format, (i.e. one bit per pixel), by binary image generator 54. This binary data from generator 54 can then be converted to grayscale by grayscale convertor 56 before processing. A typical operation performed by the grayscale convertor 56 is convolution or filtering, then scaling of a high resolution binary image into a coarser gray image. However, the edge information present in the binary image is encoded naturally by the convolution or filtering operation into gray depth. An exemplary description of a grayscale convertor can be found in EP-A-585,043.

The image generator 51 also can download (in advance of printing) halftoning and thresholding information tuned to the special characteristics of the imager and the desired imaging response. This download file is not image data, but rather the contents of the look-up table used for halftoning or thresholding. For example, software in the image generator could determine the level to erode or dilate a specified font for the target write black or write white platform, and produce an appropriate download file.

FIFO 58 provides buffering which allows data to be delayed for use in multi diode configurations and delayed for accessing two adjacent scans for interpolation. As will be seen, in a multi-diode configuration, the diodes are positioned along the process direction with some beam spacing distance. Because of this, at any moment during printing, one diode will be accessing data from a different portion of memory in the process direction than another diode. Control of the FIFO buffers in a multi-channel configuration, such as that of Figure 3, is the responsibility of interlace formatter 80 in cooperation with phase/resolution controller 66. Since the image information is sent only once from the image generator in the form of serial rasters, the FIFO buffers the number of rasters spanned by the laser diodes in the process direction. Furthermore, FIFO 58 provides delayed raster information for use with other image processing functions. In this case, these delayed rasters are used by resampling interpolator 60 in pairs.

The existence of resampling interpolator 60 in the electronic pathway between the image generators and the output allows a unique opportunity to electronically map data spatial position into arbitrary misalignment of the imager and its mechanical process as well as the customary use which provides resolution conversion. The information required to conformally map the data into the imperfections of the engine and laser scanner are obtained from the linearity and registration controller 78, and processed through phase/resolution controller 66, and can be viewed as a dynamic resolution control. Any imperfection in the platform which can be measured accurately can be servoed electronically for conformal electronic registration.

Resampling interpolator 60 executes a standard image processing function of interpolation, which can be linear interpolation for processing simplicity. For the hyperacuity printer 50, the spot on the photoreceptor is tracked by appropriate electronics, taking into account electronic registration requirements. Without electronic registration feedback, the phase/resolution controller 66 would start from zero and accumulate a constant value in both the fastscan and slowscan directions With feedback, however, the start values or accumuland values are dynamically biased by adding in changing error values during printing. This information about the spot's current position is passed to resampling interpolator 60 which returns a sample intensity for that position, called a resample.

To obtain a resample, the spot's current position, measured in units of addressability in both x (fastscan) and y (slowscan or process) dimensions, is not necessarily coincident with one of the integer sample positions, but instead fractionally positioned among four of the nearest neighbors. The interpolator executes an algorithm which estimates what the sample intensity is at the current position by extrapolating the intensities of these four closest neighbors. The simplest form of this calculation assumes that the intensity varies in a straight line between adjacent samples, thus the term linear interpolation.

In addition, the resampling interpolator 60 will simultaneously calculate the local rate of change (slope) of the intensities and pass this information on to thresholder 68 as shown by line 85. This information can be used to predict where the exposure intensities of lineart will cross the xerographic threshold.

As mentioned above, the resampling interpolator is used for resolution conversion. EP-A-580,388 describes an alternative means and method of performing resolution conversion in the process direction in a hyperacuity printer, without the use of a resampling interpolator. US-A-5,229,760 and EP-A-461,854 also address resolution conversion in the process direction, but do not use an interpolator.

Thresholder 68 converts the resampled information from interpolator 60 into a gray data stream which drives the D to A converter when lineart, such as fonts and lines, is to be rendered. The hyperacuity printer 50 has the ability to position edges of image regions very precisely in the process and fastscan directions due to the use of timing and variable intensity as described above. The thresholder, however, attempts to render the sampled data by estimating where the sampled representation crosses the xerographic threshold. One form of hardware to accomplish the thresholding function is a cache memory acting as a lookup table. Another form of hardware to perform the thresholding function could be a processor or other suitable electronics to calculate the function in real time.

The thresholder 68 utilizes two dimensional slope information, line 85, generated by resampling interpolator 60, (which is generally thrown away in conventional interpolation schemes), and therefore is able to predict threshold crossings of the input file with subpixel precision. This is important because it means that using bitmaps with ever increasing resolution (beyond the human visual systems' acuity cutoff of around 300 to 400 pixels per inch at a 12 inch view distance, for instance) to position edges is no longer necessary.

In addition, this edge information can be used in conjunction with prior knowledge of the printer tone reproduction curve (TRC) and spot dimensions to compensate for the width of the spot, and thus achieve printer device independence for rendering an image on charge area development (write-black) printers or exposed area development (write-white) printers. This also makes the need to predistort fonts to compensate for printing on particular printers unnecessary.

Halftoner 70, including dot generator 72 and screen generator 74, converts the resampled information from resampling interpolator 60 into a binary map when pictorials are to be rendered. Pictorials require many levels of gray to be contour free, as well as a fine dot structure to make graininess imperceptible. A 4800 per inch addressability printer (1200 scans per inch and 4 levels of gray on photoreceptor, for instance) will have the ability to produce bitmaps with over a thousand levels of gray at 150 halftone dots per inch, for example (4800 / 150 = 32 addressability units per halftone cell side; 32 x 32 = 1024 possible levels). In addition, the tone reproduction curve can be embedded into the dot definition since only 256 levels (or less) need to be represented in the input data. In addition, the laser spot shape and size is compensated for. In order to accomplish this, a high fidelity representation of a halftone dot is required.

The definition for the halftone dot, as a function of spot position on the photoreceptor and the required gray level is stored in a memory. As the spot scans, the intensity of the spot will be adjusted by the D to A converter (or any other intensity modulation scheme such as pulse width modulation or duty cycle modulation, for instance) by the multi-bit (gray) output of the halftoner to define the boundaries of the halftone dots. For the case of a halftone dot with a pitch of 1/150 inch, 4800 addressability (4800 / 150 = 32 addressability units on each side of the halftone cell) and 256 different gray levels, the number of bits required in memory to define it is on the order of a million (32 x 32 x 256 memory locations x 4 bits per memory location = 1.05 million bits in the memory of the example.).

This halftoner differs with others of prior art in that intensity information (256 values) as well as screen position (32 x 32 values) are used as an address into the memory, and the multi-bit value output is directed to a gray modulator. Prior art halftoners retrieve a value based on the screen address only, compare it with the input intensity information (with a hardware comparator), and turn a laser either on or off depending on whether the value retrieved is above or below the input intensity.

In addition, halftoner 70 has very fine control over the halftone dot shape and size. For example, the halftoner will be able to produce dots with elliptical shape, or other optimized shapes to minimize dot gain in the mid tones or maximize impulse response in the highlight areas.

In order to properly render printed images, all display systems utilizing binary presentation, such as xerography and offset lithography, must be able to discern the difference between gray images (toneart or pictorials), and synthetic images (lineart, including text and lines). This is because binary printers must print gray images by halftoning. There is no ability to control a sufficient gradient of gray to produce continuous tone, as in photographs or thermal transfer printers. On the other hand, it is important from a visual point of view that high contrast lineart and text be printed with smooth edges. This is accomplished through segmentation via segmenter 62.

When printing the sampled representations, the samples will be passed through both halftoner 70 (for toneart) and thresholder 68 (for lineart) simultaneously. An additional bit, known as a segmentation bit or tag bit, line 63 from FIFO 58, is carried along with the multi-bit sample pixel and is delivered by the segmenter 62, after suitable time delay to the halftoner and thresholder. (Note that several bits can be used to define segmentation boundaries even though one bit is used for this description.) This bit will be used to switch between these two devices during printing, according to whether toneart from the halftoner or lineart from the thresholder is to be rendered. The resolution of information which determines this can be as high as one bit per sample, or some lower number. In order to control from where D to A converter 76 gets its input, segmenter 62 can either modify the input addresses to halftoner 70 and thresholder 68, or provide an enable signal to tri-state output devices on the outputs of halftoner 70 and thresholder 68. In any case, segmenter 62 provides a switching function between thresholder 68 and halftoner 70 via output 64. The segmenter preferably utilizes slope information 85 from resampling interpolator 60 in determining segmentation.

It can be appreciated that other segmentation algorithms known in the art, including real-time segmentation analysis, may be used to differentiate between pixels to be halftoned and pixels to be thresholded. In addition, more than two segmentation partitions may be utilized by adding new algorithm hardware in parallel, and switching among them with extra segmentation or tag bits. As will be seen, segmentation bits can be used to select one of several "modes" of operation in accordance with the present invention.

Halftoner 70 and thresholder 68 provide several intensity levels at the frequency specified by the fastscan clock. The number of levels is determined by system design considerations, including tradeoffs between clock rate, number of channels, machine throughput, and xerographic noise. D to A converter 76 can use duty cycle, pulse width or current control to achieve the analog conversion for several light intensities.

Note that, because of the way in which levels are specified, the number of values required to encode the levels is always one more than number of levels. For instance, if four levels are specified, the required values for intensity would be 0%, 25%, 50%, 75%, 100% = 5 values. It can be appreciated that more than four levels, such as 16 or 256, could be useful and easy to implement.

An important aspect of a hyperacuity printer is the incorporation of laser diode source 15. The laser diode 15 offers a bandwidth well into the GHz range, with the ability to modulate its intensity with electronic current control. In addition, laser diode may be produced in a monolithic, closely-spaced multi-beam configuration, allowing throughput and quality improvements. In the configuration shown in Figure 3, a two laser diode system is illustrated. US-A-5,216,443 discusses embedding the digital to analog (D to A) conversion on the semiconductor substrate with the laser diode, the D to A conversion being controlled using pulse width modulation.

Another useful and unique feature available in printer 50 is that of linearity and registration control. For instance, color reproduction demands a greater precision in machine mechanical requirements for registration to achieve color layer to layer registration in the one to two mil range. It is extremely important that layer to layer registration be precise. With such precision, it can be possible to achieve process color for lines and text using this system. This precision is extremely difficult and expensive to achieve mechanically. Other requirements for registration in a multi station color machine can also be met, where each writing station would be calibrated to deliver a pixel map which overlaps precisely the pixel maps of the others. It is evident that, assuming the errors can be measured, that the two dimensional hyperacuity printer will be able to achieve these goals through electronic registration using linearity and registration controller 78. For example, at 4800 per inch addressability, the placement precision of edges is 2 mils.

Linearity and registration controller 78 does this by feeding back spot position error information to phase/resolution controller via line 81. Controller 78 also appropriately displaced samples to the decomposer electronics (halftoner 70) via line 83. In addition, x-y position registration, scan linearity correction, velocity servoing and photoreceptor skew and runout correction can be performed electronically while relaxing the specifications on the optomechanical components.

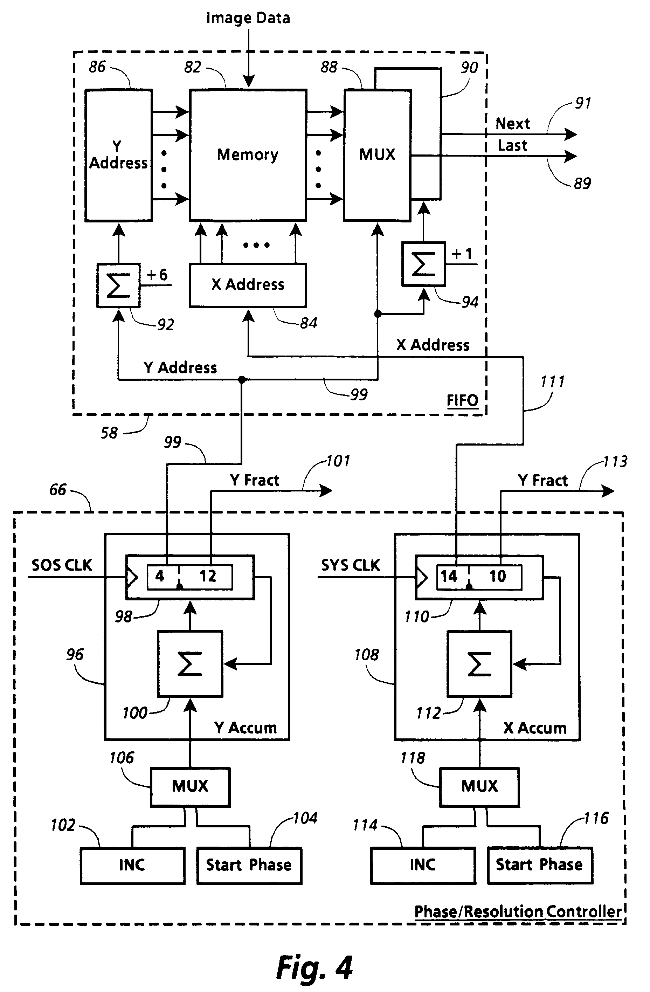

Turning now to Figure 4 through Figure 18, the subsystems relevant to the present invention in printer 50 will be described in detail.

## II. SYSTEM DETAILS

### 1.0 FIFO

Figure 4 is a detailed block diagram of the elements included in FIFO 58 and phase/resolution controller 66. FIFO 58 is a memory device configured to be utilized as a two dimensional (2-D) window on the image data stored therein, having a fastscan (x) and a slowscan (y) dimension. Phase/resolution controller 66 as well as interlace formatter 80 will assist in providing addresses into that 2-D window.

FIFO 58 has memory 82 in which a number of rasters, or scanlines are stored. Each raster has a plurality of pixels, and each pixel has one to eight bits. The width of memory 82 is at least large enough to store an entire raster of pixels. In addition, the width includes capacity for the segmentation or tag bit or bits, as necessary. Segmentation or tag bits are delivered to the segmenter through line 63, and are stored with the pixel in the FIFO to insure correct time delay in application of the halftoning or thresholding algorithms. The height of memory 82 is at least large enough to compensate for the beam spacing in a multi-channel system, plus accommodation for one raster to be used by resampling interpolator 60, and plus one or two rasters to enable the reading of one raster while writing another. Typically four to eight rasters are stored, but the invention is not limited by such.

FIFO 58 is configured such that it is a three port memory having one write port and two read ports. As memory 82 is being addressed, simultaneously the image generator loads the raster being generated into the FIFO as two rasters are being read out for processing. As will become apparent, the x address for all three ports are the same while the effective y address for each port is different by a given offset. Furthermore, for a given x address, the pixel stored at that address for each raster stored in memory 82 is available.

Memory 82 is addressed in the x direction by XADDR demultiplexer 84 (demux). Phase/resolution controller 66 supplies a fourteen bit number via XADDRESS line 111 to demux 84 thereby allowing demux 84 to address $2^{14}$ pixels along a raster stored in memory 82. Phase/resolution controller 66 supplies a four bit number via YADDRESS line 99 creating $2^4$ addresses. In the y direction there need to be offsets in the addressing in order to accommodate simultaneous reading and writing of memory 82. In order to create the necessary offsets for y direction addressing, full adder 92 adds a fixed value to YADDRESS 99 which in turn is used by YADDR demux 86 for write port addressing. In a similar manner, full adder 94 supplies a fixed offset to one of the two read ports. Since all rasters stored in memory 82 are available simultaneously, mux 88 and mux 90 are used to select two of the rasters for processing at any one time It is the use of these two muxes that creates the two read ports. Data from mux 88 is shown as line LAST 89 while data through mux 90 is shown as NEXT line 91. The use of the LAST and NEXT rasters will become apparent when discussing the resampling interpolator. Note that the addresses do not advance by more than one at a time, thus the FIFO-like nature of this memory subsystem.

### 2.0 Phase/Resolution Controller

One purpose of phase/resolution controller 66 is to provide addressing to FIFO 58 as described above. Another purpose of phase resolution controller 66 is to provide a fractional accumulated number for use by resampling interpolator 60.

Phase/resolution controller 66 has a y accumulator 96 and an x accumulator 108. Y accumulator 96 includes register 98 and full adder 100.

Register 98 is a sixteen bit register whereby the leftmost four bits represent the integer portion and the remaining twelve bits represent the fractional portion of the sixteen bit number. The integer portion is used as the YADDRESS line 99 while the fractional portion is multiplication factor line YFRACT 101. As will be seen, YFRACT 101 will be used by resampling interpolator 60.

Phase/resolution controller 66 also has X accumulator 108. X accumulator 108 includes register 110 and a full adder 112. Register 110 is a twenty-four bit register whereby the leftmost fourteen bits represent the integer portion and the remaining ten bits represent the fractional portion of the twenty-four bit number. The integer portion is used as the XADDRESS line 111 while the fractional portion is multiplication factor line XFRACT 113. As will be seen, XFRACT 113 will also be used by resampling interpolator 60.

Each accumulator has associated with it a loadable INC register and a loadable START PHASE register. During each clock cycle controlling the accumulators, the accumulators can only increment by the number loaded in the INC registers. The value loaded in the INC registers is fractional, therefore the accumulation is fractional. As will be understood from the discussion of the resampling interpolator, the fractional increment enables the calculation of pixels values between two pixels and/or two rasters stored in the FIFO. Once the accumulators have accumulated the fractional value whereby it rolls over into the integer value, the address into the FIFO is at the next address position, or pointing to the next pixel or raster of data. In the system described herein, in order to satisfy Nyquist criteria, it may be desirable to have at least two clock cycles before changing to the next address, therefore the INC values may be restricted to less than or equal to 0.5.

For x accumulator 108, the value in INC register 114 is equal to the number of samples per inch in the fastscan direction, divided by the number of fastscan clocks per inch. For instance, at 600 samples per inch, and 4800 fast scan clocks per inch, INC = 0.125. The value in START PHASE register 116 equals zero, (unless a registration correction value has been provided by the linearity and registration controller 78, which will be discussed later). The process for determining the values in the INC register 102 and START PHASE register 104 for y accumulator 96 will be explained in more detail with reference to the interlace formatter.

At the beginning of a page, register 98 of y accumulator 96 is loaded with a START PHASE value from register 104. With each start of scan clock signal, SOSCLK, y accumulator 96 is incremented by the value stored in INC register 102. Since the number being accumulated is fractional, the integer part of the number in register 98 will not be incremented by more than one at a time. In this example, registers 102, 104 are each thirteen bits.

At the beginning of a scan, register 110 of x accumulator 108 is loaded with START PHASE value from register 116. With each system clock signal, SYSCLK, x accumulator 108 is incremented by the value stored in INC register 114. Since the number being accumulated is fractional, the integer part of the number in register 110 will not be incremented by more than one at a time In this example, registers 114, 116 are each eleven bits.

In general, the x and y address for the FIFO are tracked by the x accumulator for the fastscan direction and with the y accumulator for the slowscan direction. Therefore, the integer portions of the accumulators should never advance by more than one since the system is systematically clocking through the memory in a FIFO-like fashion.

## 3.0 Interlace Formatter

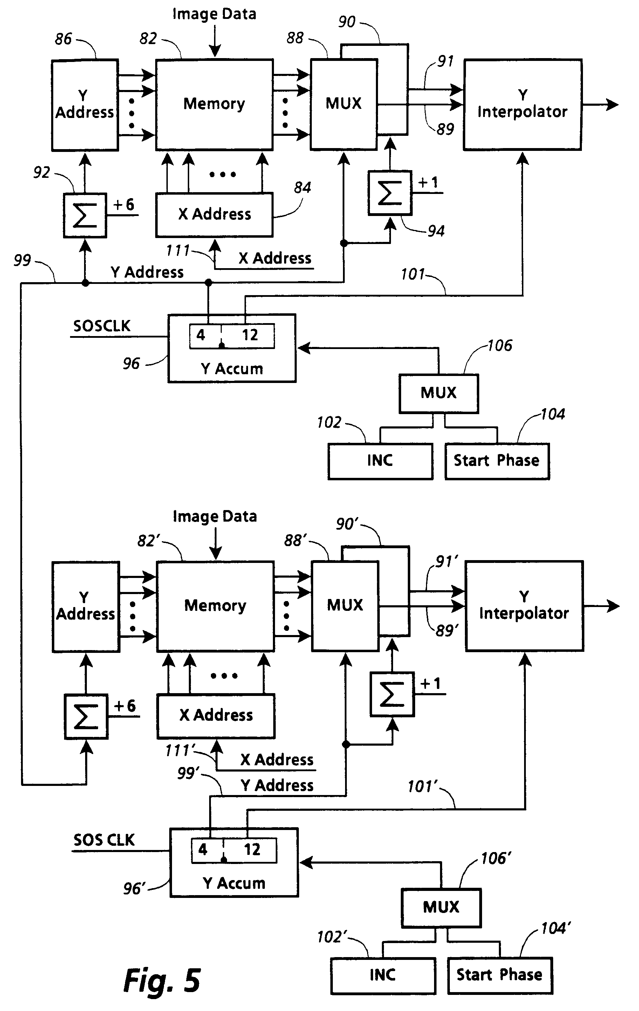

The phase/resolution controller along with the interlace formatter facilitate resolution conversion, registration correction, and interlacing. Referring to Figure 5, the interlace formatter is basically a duplication of the y components in the phase/resolution controller with an offset to allow each channel to access the FIFO raster data at a point in the data which matches the channel's beam position in the two channel system of this example. The offset loaded into the START PHASE registers, accounts for the beam spacing between photodiodes. As shown, there is a connection (line 99) between the channels, which maintain the write address for both channels, thus causing the write address for both channels to be the same. Since the write address is the same, the same data is being written into the memory of each channel simultaneously. However, due to the values in the START PHASE registers, the read address is staggered to compensate for the distance between the two photodiodes. Therefore, the the image generator only needs to write one raster at a time into memory before printing, thereby decreasing its complexity over prior systems which required the image generator to supply different data to each channel simultaneously. The interlace formatter facilitates accessing data in the memory in two places simultaneously, thus creating interlacing automatically. The interlace formatter described herein has the the ability to map any interlace factor into any set of rasters that are in the memory.

US-A-5,233,367 describes an image forming apparatus and method for interlace scanning plural light beams by deflecting the plural beams with a rotating polygon onto a recording medium wherein the spacing between adjacent beams hold the relation

$$\frac{I}{Q} = \frac{B\omega f}{V_o}$$

wherein $I$ is an interlace factor equal to the number of reference scans between adjacent beams from a single facet of the polygon on the photoreceptor. The photoreceptor velocity is $V_o$, $\omega$ is the polygon angular velocity, $f$ is a number of facets per revolution of the polygon, $Q$ is the number of beams and $B$ is the beam spacing. As will be shown, the interlace formatter described herein implements a hardware configuration which utilizes the above equation to facilitate interlacing by mapping rasters into the polygon scan structure of the system.

Generally, for interlace scanning, any positive value for the interlace factor $I$ may be selected. By selecting various values for the interlace factor $I$ and the number of beams $Q$, it is possible to obtain equally spaced, fractional or multiple interlace scanning.

For equally spaced, non-overlapped interlace scanning, $I$ must be selected as a positive integer and itself and $Q$ must not have any common integer divisors greater than 1. For equally spaced, non-overlapped, interlace scanning, the interlace factor $I$ is the distance between adjacent scans laid down by a single facet of the polygon divided by the distance between adjacent, interlaced scans. Between any two adjacent scans laid down by a single facet of the polygon are interlaced additional scans laid down by prior or subsequent facets of the polygon.

In a dual channel interlace formatter shown in Figure 5, there is a master channel (channel 0) and a slave channel (channel 1). For clarity, the device numbers in the slave channel are indicated with a prime notation. The values for START PHASE registers can be calculated by the equation START PHASE = $(ch)(D)(B)$ where $ch$ is the channel number, $D$ is the target data density, or data resolution, in rasters per inch, on the photoreceptor and $B$ is the beam spacing, in inches, between the photodiodes. $B$ can be found from the equation above or can be measured. In Figure 5, START PHASE register 104 is loaded with a zero, since it is in channel zero. START PHASE register 104' is loaded with $(D)(B)$ since it is channel 1. This is the amount of offset into the memory required for interlacing.

The value in the INC registers 102, 102' represents how many rasters the photoreceptor moves per single facet. INC equals the density (rasters/inch) times $V_o/\omega f$ in inches/facet. In other words, INC represents how far it is necessary to go through the FIFO by a certain number of rasters. This number can be fractional.

Since INC can be fractional, y accumulators 96, 96' can request pixel values for a scan which falls between rasters. Therefore, y interpolators are used to interpolate the necessary data. A significant feature of this interlace formatter is in its ability to look into the FIFO, get the two rasters needed depending on where the scan is on the photoreceptor, and interpolate therebetween in order to get the correct data within a fraction of a raster precision.

## 4.0 Resampling Interpolator with slope output

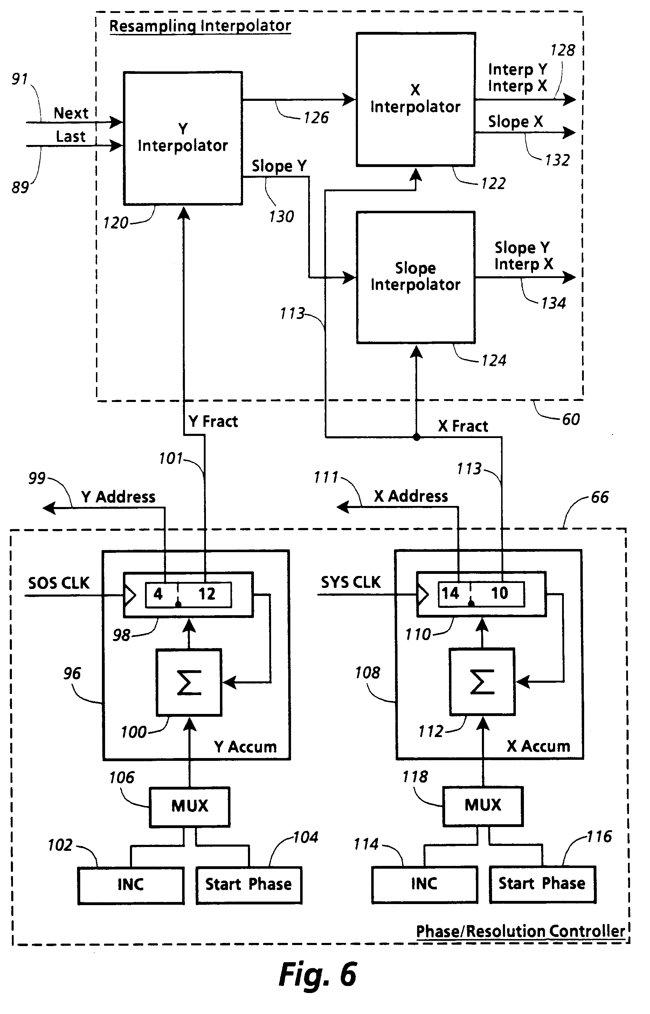

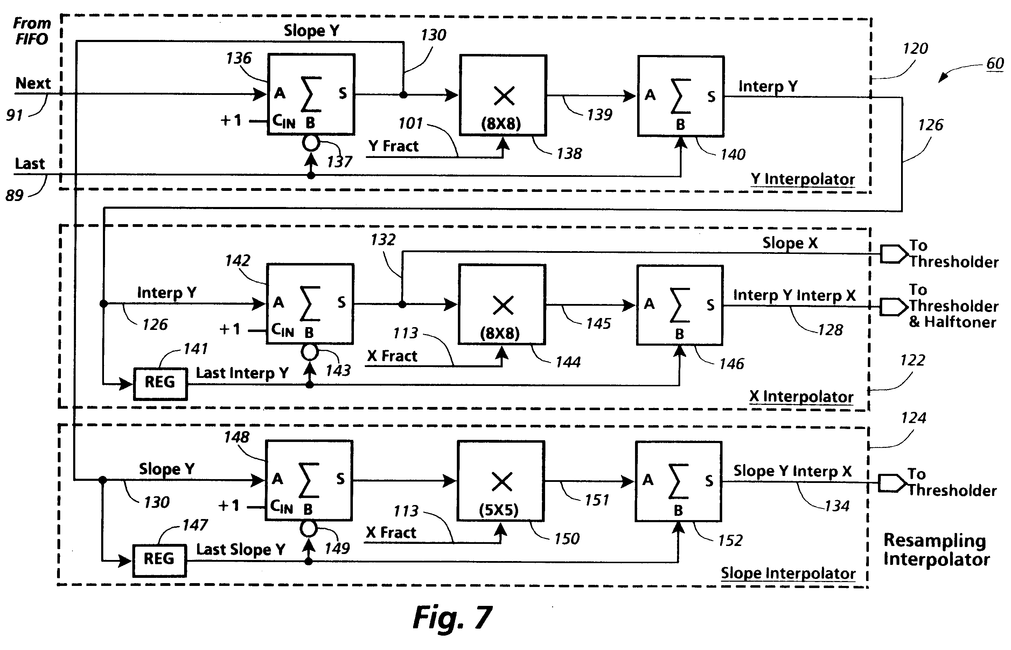

Figure 6 and Figure 7 are detailed block diagrams of resampling interpolator 60 and associated circuitry. The outputs of the resampling interpolator are used for several image processing functions in the hyperacuity printer. First, sampled pictorial data can be reconstructed for use by the halftoner. Second, sampled text and lineart data can be reconstructed with an enhancement to the operation of the interpolator by retaining local slope information (rate of change of intensities), thereby enabling the prediction of where the sampled image will cross the xerographic threshold. The slope information will be used by the thresholder. Third, the interpolator may be used to resample the input data at different rates to achieve different resolutions, magnification and/or angular orientations of the input data. The resampling interpolator of this system is designed such that the target density or resolution can be written independent of the input resolution of the data in the memory. Finally, electronic registration, scan linearity correction, velocity servoing and photoreceptor skew correction can be performed in the printing system through suitable measurement and feedback of the errors in spot position. This information will be provided by the linearity and registration controller.

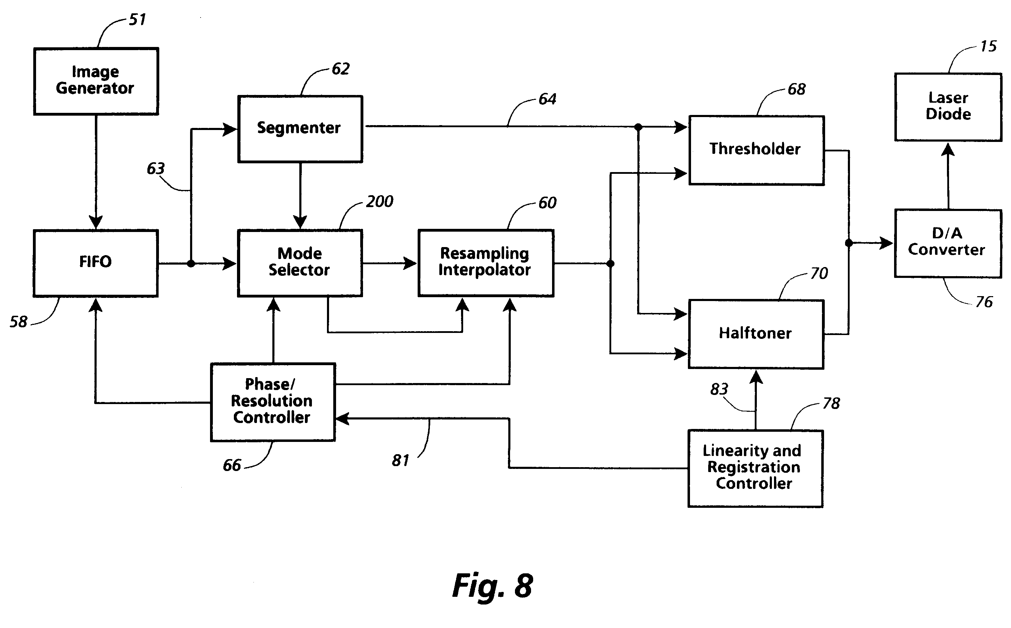

Referring to Figure 6, resampling interpolator 60 receives two lines of adjacent raster data, appropriately labeled NEXT 91 and LAST 89, from the FIFO. The raster data is first processed by y interpolator 120 and then passed on to x interpolator 122 via data line 126. At the same time the raster data is being processed, slope information is being supplied by y interpolator 120 and x interpolator 122. Y slope information is processed by slope interpolator 124. Details of each interpolator will be discussed with reference to Figure 8. As part of the processing of both the raster data and the slope data, y interpolator 120 uses the fractional part of the number, YFRACT 101, from y accumulator 96. In a similar manner, x interpolator 122 and slope interpolator 124 both use the fractional part of the number, XFRACT 113, form the x accumulator 108. The outputs of resampling interpolator 60 include interpolated raster data, INTERPYINTERPX 128, with associated slope information, SLOPEX 132 and interpolated slope data SLOPEYINTERPX 134.

Referring now to Figure 7, shown are detailed block diagrams of y interpolator 120, x interpolator 122 and slope interpolator 124. Raster data from the FIFO in the form of NEXT line 91 and LAST line 89 are supplied to y interpolator 120. These two rasters represent adjacent raster from an image stored in the FIFO. As shown, raster LAST 89 is subtracted from raster NEXT 91 using full adder 136. Subtraction is accomplished through twos complement arithmetic whereby bubble 137, on the B input of adder 136, denotes an inverse function and a + 1 on the $C_{IN}$ input adds the plus one necessary to carry out the twos complement function. The result of this subtraction is then multiplied by YFRACT 101 which is the fractional part of the number stored in y accumulator 96 (Figure 6). Also as a result of this subtraction is the associated y slope information shown as SLOPEY line 130. Multiplier 138 performs an 8x8 multiplication in which the eight most significant bits of the result, line 139, are passed on to full adder 140. Full adder 140 adds the result of the multiply with raster LAST 89 to complete the y interpolation, with the result being line INTERPY 126. INTERPY 126 represents the y interpolated data.

X interpolator 122 receives its input from the output of y interpolator 120. Line INTERPY 126 becomes the A input to full adder 142. Also, line INTERPY 127 is delayed one pixel by register 141. The result of this delay, LAST INTERPY, is inverted by bubble 143 and then input into the B input of adder 143 with the carry input held high. Therefore, using twos complement arithmetic, LAST INTERPY is subtracted from INTERPY. The result of this subtraction produces associated x slope information SLOPEX 132. Also, the result of the subtraction becomes an input to multiplier 144. Multiplier 144 multiplies XFRACT 113, which is from the fractional part of the number in the x accumulator 108 (Figure 6), by the output of adder 142. The most significant eight bits of the result of the multiplication is then added to LAST INTERPY by adder 146, resulting in interpolated data INTERPYINTERPX 128.

Slope interpolator 124 utilizes y slope information line SLOPEY 130 from y interpolator 120 as the A input into adder 148. SLOPEY 130 is delayed one pixel clock by register 147 becoming LAST SLOPEY. LAST SLOPEY is inverted via bubble 149 and thereby input into the B input of adder 148 with the carry input held high. The result is the subtraction of LAST SLOPEY from SLOPEY. The output of adder 148 is then multiplied by XFRACT 113 by multiplier 150. Multiplier 150 is a 5x5 bit multiplier, and the result is a five bit number being the five most significant bits resulting from the multiplication. In the final computation, the result of the multiplication, line 154, is added to LAST SLOPEY by adder 152 resulting in associated interpolated slope information denoted as SLOPEYINTERPX line 134.

In summary, y interpolator 120 implements the equation: YFRACT*(NEXT-LAST) + LAST = INTERPY. X interpolator 122 uses the output of y interpolator 120 and implements the equation of XFRACT*(INTERPY-LAST INTERPY) + LAST INTERPY = INTERPYINTERPX. And finally, slope interpolator 124 implements the equation XFRACT*(SLOPEY-LAST SLOPEY) + LAST SLOPEY = SLOPEYINTERPX. Therefore, INTERPYINTERPX represents the interpolated value, SLOPEX represents the x slope of the interpolated value, and SLOPEYINTERPX represents the y slope of the interpolated value. (It should be noted that interpolation using the above equations is assumed to be linear as long as the value of YFRACT is not changing, or changing very slowly, with respect to XFRACT.)

## 5.0 Variable Resolution Processing

The purpose of variable resolution processing circuitry is to allow for processing of various types of image data, having differing aspect ratios as described in the background, using various gray depth and various resolutions where resolution is set forth in pixels per inch. For instance, image data representing pictorials benefits most by having several levels of gray, or gray depth, representing that data. On the other hand, lineart and text is less dependent on gray depth, but benefits most from an increase in resolution. Therefore, by using variable resolution processing of the present invention, image data representing pictorials and image data representing lineart and text can be stored in the same FIFO memory at different resolutions and gray depth definitions, yet can be processed concurrently. Image data is stored in the FIFO using one of several storage modes, as will be described below, to make the best use of the storage space while also providing the best combination of gray depth and variable resolutions, thereby accommodating all types of image data. Also, associated mode information for the image data is stored in the FIFO.

Described below is a system which can print image data with different aspect ratios embedded within the same image. Printing data with different aspect ratios includes printing data having different resolution and different gray depth. This system requires only one image buffer, the FIFO, and only one clock frequency reference from the image generator, since the number of bits per square inch remains constant. It also makes full use of the data bandwidth and storage capabilities of the image generator since it can more efficiently store fidelity information within the confines of the given image buffer.

Turing now to Figure 8, shown is a block diagram of a modified single channel hyperacuity imager subsystem including a mode selector 200 in accordance with the present invention. Figure 8 is similar to Figure 2, except for the addition of mode selector block 200. As can be envisioned, the modified channel shown in Figure 8 could be extended to a multiple channel system like that of Figure 3. For consistency, the same numerals are used for similar elements previously described above. Mode selector 200 receives image data from FIFO 58 and supplies data to resampling interpolator 60. As will be seen, phase resolution controller 66 continues to supply addresses to FIFO 58 and fractional multipliers to resampling interpolator 60, however, some modifications to the addresses and fractional multipliers may be necessary when switching between modes. Mode selector 200 also receives MODE information from segmenter 62. This MODE information will be used to select the mode in which the data is stored in FIFO 58.

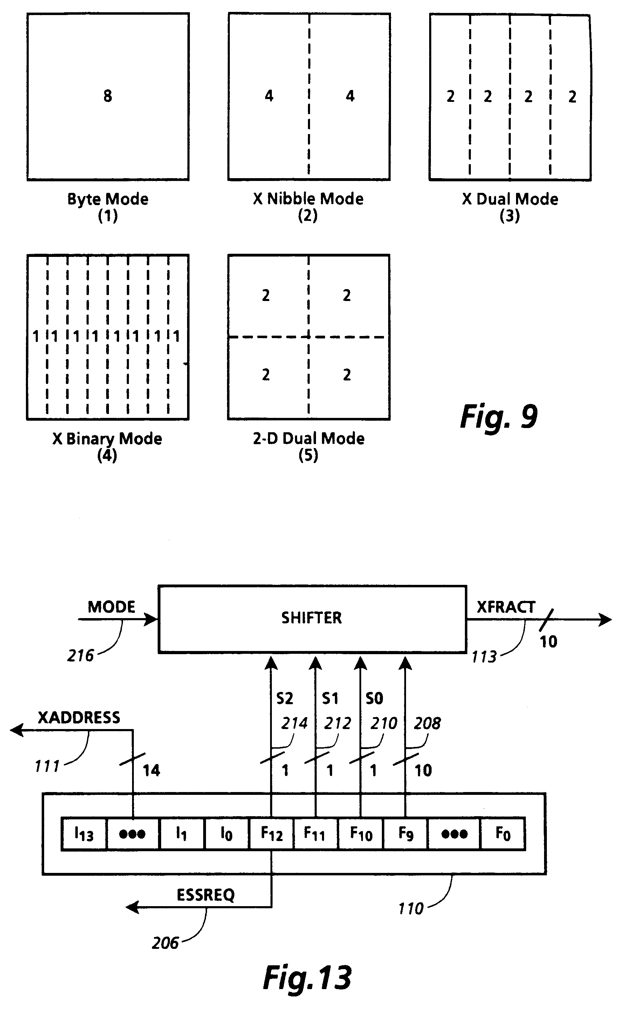

Referring to Figure 9, shown are five different modes in which data can be stored in an eight bit memory location in FIFO 58. In general, one or more packed pixels having various gray levels can be stored in each memory location. Mode (1) represents "byte mode" where one pixel, having eight bits of gray depth is stored in a given eight bit memory location. Mode (2) represents "x nibble mode" where two pixels, each having four bits of gray depth are stored in a given eight bit memory location. For data stored as x nibble mode, the resolution of the data in the fastscan direction in doubled assuming the size of the FIFO memory remains the same. Mode (3) represents " x dual mode" where four, two bit pixels are stored in a given eight bit memory location. For data stored in x dual mode, the resolution of the data in the fastscan direction is four times greater assuming the size of the FIFO remains the same. Mode (4) represents "x binary mode" where eight, one bit pixels are stored in a given eight bit memory location. For data stored in x binary mode, the resolution of the data in the fastscan direction is eight times greater assuming the FIFO memory size remains the same. Finally, mode (5) represents "2-D dual mode" (two dimensional dual mode) where data is stored as four, two bit pixels.

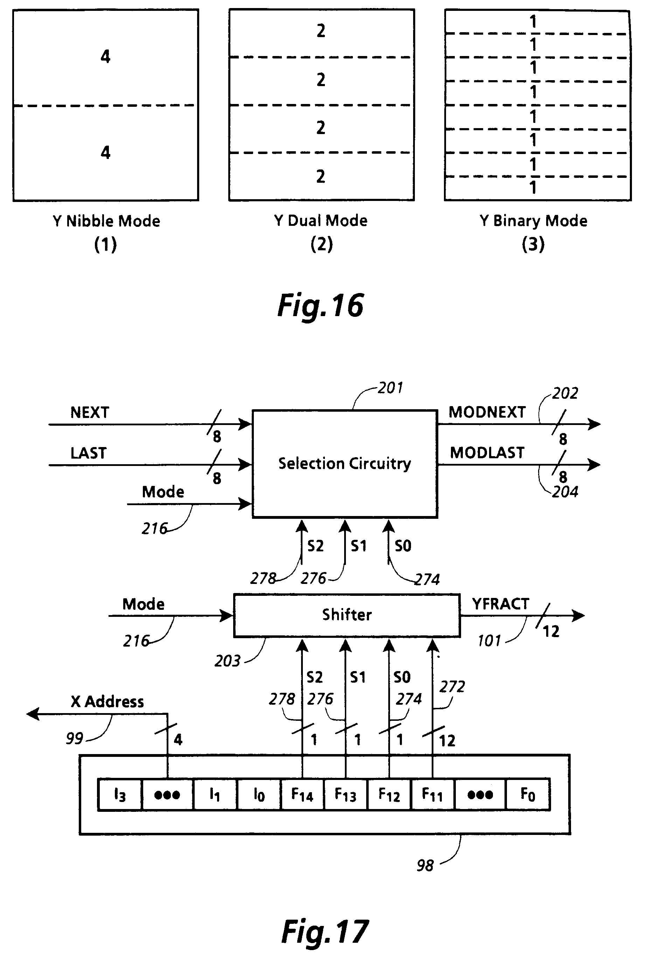

This mode differs from dual mode in that the pixels stored in this mode represent a doubling of resolution in both the fastscan and the slowscan directions assuming the FIFO memory size remains the same. (As will be seen with reference to Figure 16, pixels can also be stored in y direction modes.)

Of course, if all pixels in the FIFO memory were stored in x nibble mode, the size of the FIFO could be decrease by one half, yet the resolution, or number of pixels per inch, would remain the same. In a similar manner, with x dual mode, memory size could decrease by a factor of four with resolution remaining the same, with x binary mode, memory size could reduce by a factor of eight with resolution remaining the dame, and with 2-D dual mode, memory size could be reduced by one half with resolution remaining the same. However, as will be seen, pixels using any combination of the five modes can be stored in FIFO 58 at the same time.

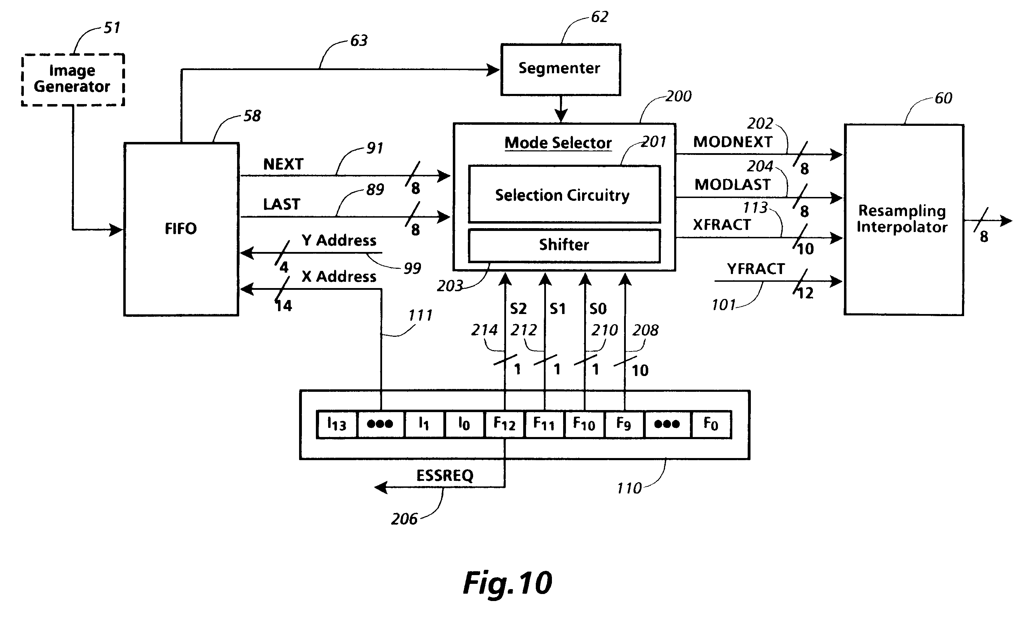

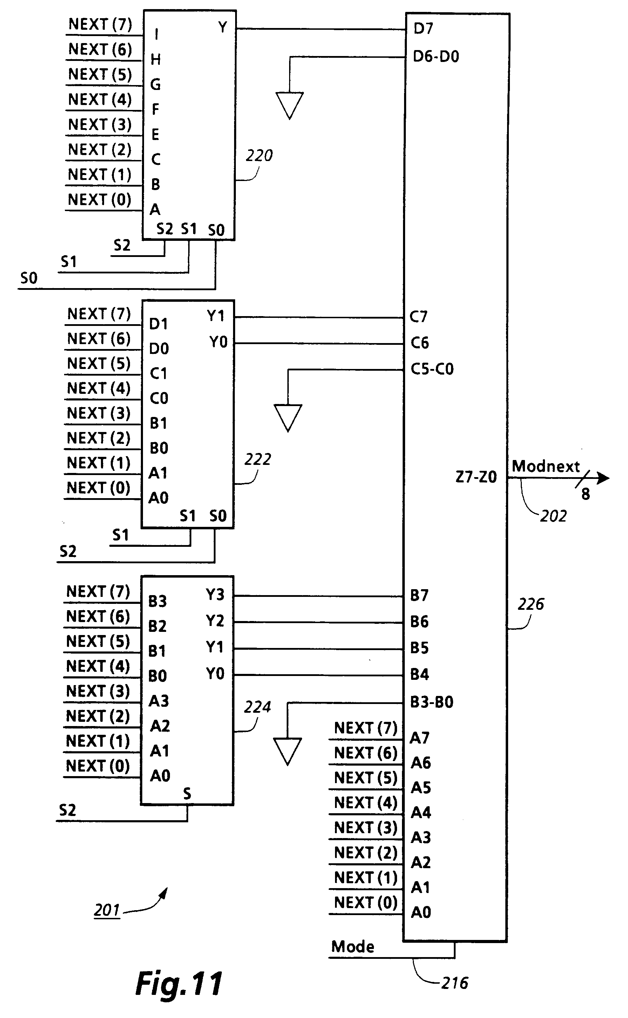

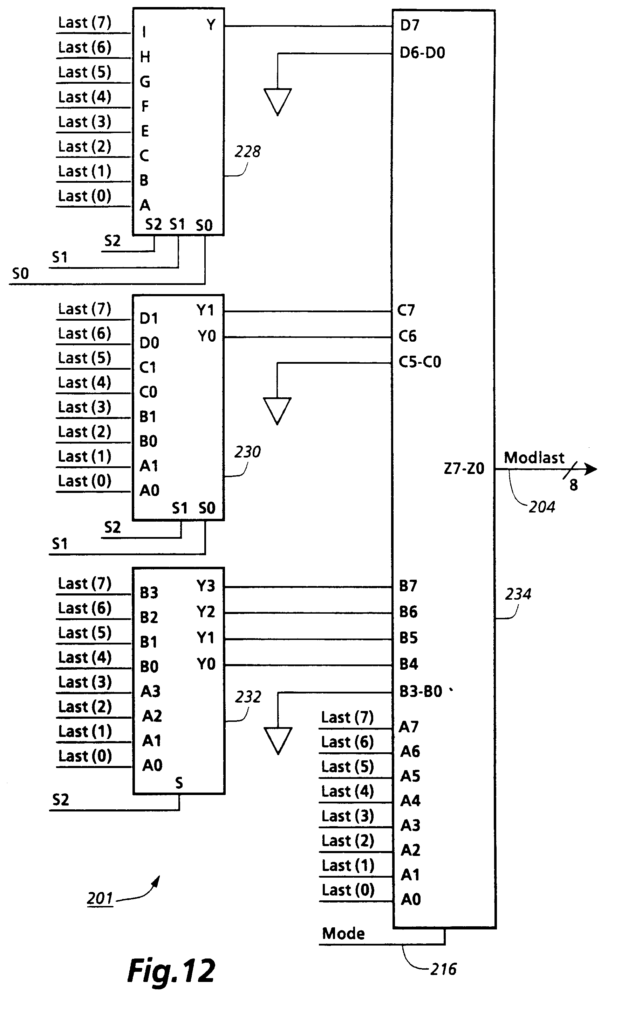

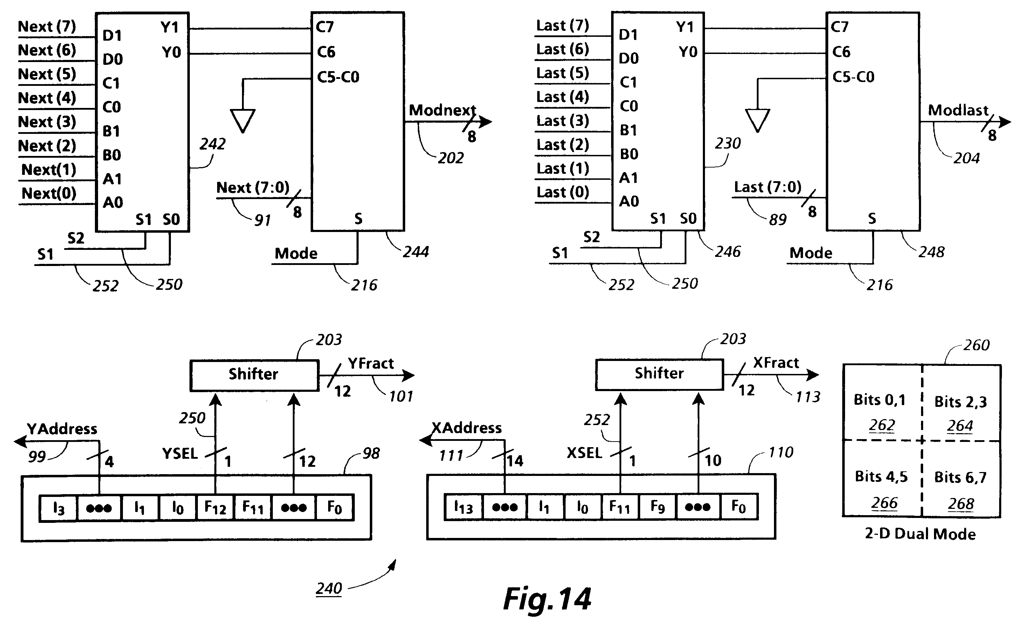

Referring to Figure 10, shown are the interrelationships between the elements used to enable the application of the five modes described above with reference to Figure 9. Included are FIFO 58, mode selector 200, segmenter 62, resampling interpolator 60 and x accumulator register 110. Mode selector 200 includes selection circuitry 201 and shifter 203. Selection circuitry 201 will be described with reference to Figures 11 and 12 and shifter 203 will be described with reference to Figure 13.

As described above with reference to the phase resolution controller, the integer portion of register 110 supplies XADDRESS 111 to FIFO 58, while the fractional portion of register 110 provides the data which will determine the fractional multiplier, XFRACT 113, to resampling interpolator 60. In the configuration shown, the integer portion of register 110 remains at fourteen bits ($I_{13}$-$I_0$). However, the fraction portion has been increased to thirteen bits ($F_{12}$-$F_0$). This increase is to compensate for the use of the three most significant bits (MSBs) of the fraction which will be used by mode selector 200. In this figure, mode selector 200 receives two scanlines of image data, NEXT 91 and LAST 89, from FIFO 58 and delivers modified scanlines MODNEXT 202 AND MODLAST 204, to resampling interpolator 60. The fractional portion of register 110 is also provided for use by mode selector 200 In this configuration, $F_{12}$ line 214, becomes select signal S2, $F_{11}$ line 212 becomes select signal S1, and $F_{10}$ line 210 becomes select signal S0. The remaining ten fractional bits, $F_9$-$F_0$, line 208, are also used by mode selector 200. As will be seen, $F_{12}$-$F_0$ will be used in various ten bit sections as XFRACT 113.

In operation, the stage controlling the MSB, $F_{12}$, of the fractional part of register 110 supplies ESSREQ signal 206. Signal 206 is used to tell the device supplying image data to FIFO 58 that it is ready for a new byte of information to be sent to FIFO 58. A carry out of stage $F_{12}$ into $I_0$ is indicated on ESSREQ line causing the imaging supplying device to provide eights bits of data. (Alternately, the MSB of the fraction can be used as a clock signal to the image supplying device.) In this case, those eight bits of data sent from the image supplying device can represent one pixel as in byte mode, two pixels as in nibble mode, four pixels as in dual mode, eight pixels as in binary mode, or four pixels as in 2-D dual mode. The image supplying device must know ahead of time what mode is being used to store a particular byte. The mode information can then be encoded in the segmentation tag bits, line 63, accompanying the image data that go to segmenter 62. Within segmenter 62, mode can be determined from the tag bits or be programmably set by an outside device. Segmenter 62 then provides MODE information to mode selector 200. Mode selector 200 is used to "unpack" the stored image data and put it into a form which is usable by the resampling interpolator. In this case, unpacking a pixel means returning each pixel stored in the FIFO back to an eight bit value. In other words, the packed pixel gets transformed into an unpacked pixel by adding extra bits to the packed pixel if necessary.

As can be appreciated, pixel data represented by any combination of modes can be stored in FIFO 58 concurrently. For example, one eight bit memory location may contain an eight bit pixel while the next consecutive memory location may contain two, four bit pixels. Mode selector 200 is used to provide image data to resampling interpolator 60 in accordance with the selected mode and how the pixels were stored in FIFO 58. This mode selection can change as often as every byte. In other words, the mode used to store pixels in FIFO 58 can be changed, and thus selected, on eight bit boundaries. Using the system described herein, it then becomes possible to process different areas of image data within the same image data file at different resolutions and grayscale depth. For example, pictorial image data can be processed in byte mode while text is processed in nibble mode, where processing in nibble mode doubles the resolution of the pictorial image data in that mode.

Referring also to Figure 11, shown are several multiplexers (muxes), included in selection circuitry 201. (The circuitry in Figure 11 is an example of one of many implementations that could be envisioned.) Eight bit NEXT data NEXT(7)-NEXT(0) from the FIFO becomes the input to mux 220, mux 222, and mux 224. The output of mux 220, mux 222, and mux 224 and NEXT(7)-NEXT(0) are the inputs to mux 226. Selection lines S0, S1, and S2 are coupled to fractional bits $F_{10}$, $F_{11}$, $F_{12}$ respectively. As will be seen, each mux 220, 222, and 224 provides data to mux 226 in accordance to a specific mode. MODE line 216, which is from the segmenter, selects which eight bit output word will be supplied onto MODNEXT line 202 through mux 226. This selection is in accordance with the mode used (in either the x or y direction), including byte, nibble, dual, and binary, to store the data in the FIFO. In general, the selection circuitry 201 is used to unpack the pixels that have been stored in the eight bit storage units of the FIFO.

For byte mode, the eight NEXT lines, NEXT(7)-NEXT(0),go directly to mux 226 and are transferred on to MODNEXT lines 202 without any change.

Mux 224 is the nibble mode selection mux. When nibble mode is required, select line S2, which is MSB fractional bit $F_{12}$, toggles the output of mux 224 between the lower four bits of NEXT to the upper four bits of NEXT. Essentially, for every eight bit address access into the FIFO, two four bit pixels are provided. The four output bits of mux 224 are connected to mux 226. In order to supply an eight bit modified word, MODNEXT 202, the lower four bits of the eight bit word are filled with zeros and the upper four bits are from the output of mux 224.

Mux 222 is the dual mode selection mux. When dual mode is requested, select lines S2 and S1, which are connected to fractional bits $F_{12}$ and $F_{11}$ respectively, are toggled such that four, two bit pixels are selected sequentially. The two output bits of mux 222 are connected to mux 226. In order to supply an eight bit modified word, MODNEXT 202, the lower six bits of the eight bit word are filled with zeros and the upper two bits are from the output of mux 222.

Finally, mux 220 is the binary mode selection mux. When binary mode is requested, select lines S2, S1, and S0 which are connected to fractional bits $F_{12}$, $F_{11}$, and $F_{10}$ respectively, are toggled such that eight, one bit pixels are selected sequentially. The one bit output bit of mux 220 are connected to mux 226. In order to supply an eight bit modified word, MODNEXT 202, the lower seven bits of the eight bit word are filled with zeros and the most significant bit is from the output of mux 220.

Identical mode processing is required for the NEXT scanline and the LAST scanline in order to provide one-to-one resolution correspondence for processing in the interpolator, therefore, Figure 12 is similar to Figure 11, but performs the mode conversion, or unpacking, of the eight bit LAST signals. Circuitry in Figure 12 is also part of selection circuitry 201. In this case, mux 228 is for binary mode selection, mux 230 is for dual mode selection, and mux 232 is for nibble mode selection. Mux 234 select which eight bit input will be transferred to the eight bit MODLAST output line 204. This selection is done according to the value on the MODE line provided by the selector.

Another element in mode selector (Figure 10) is shifter 203. Figure 13 shows the relationship between shifter 203 arid x accumulator register 110. As shown, shifter 203 supplies the ten bit fractional multiplier XFRACT 113. All thirteen of the fractional bits $F_{12}$-$F_0$, are supplied to shifter 203. Depending on which mode is selected, ten different bits of the thirteen will be shifted in place by shifter 203 and used as XFRACT 113. For byte mode, fractional bits $F_{12}$-$F_3$ will be shifted in place and used as XFRACT 113 For x nibble mode, fractional bits $F_{11}$-$F_2$ are used as XFRACT. For x dual made, fractional bits $F_{10}$-$F_1$ are used as XFRACT. And finally, for x binary mode, fractional bits $F_9$-$F_0$ are used for XFRACT. If precision is not available to fill all thirteen positions in the fractional number, it is suggested that the lower, or least significant bits be loaded with zeros.

Up to this point, only one dimensional fastscan modes have been discussed. With reference to Figure 14, an implementation of 2-D dual mode will now be described. Shown in Figure 14 are elements included in 2-D dual circuitry 240 for implementing 2-D dual mode. Since 2-D dual mode is two dimensional, y accumulator register 92 is used in addition to x accumulator register 110. Four, two bit pixels can be stored in an eight bit memory location thereby providing a doubling of resolution in both the fastscan and slowscan directions. In the implementation shown in Figure 14, an eight bit number can be stored as follows: bit 0 and 1 in quadrant 262; bits 2 and 3 in quadrant 264; bits 4 and 5 in quadrant 266; and bits 6 and 7 in quadrant 268. It can be appreciated that this arrangement of pixels is just one of several that could be envisioned.

In addition to registers 98 and 110, circuitry to provide 2-D dual functionality includes mux 242 and mux 244 to process the eight bit NEXT data for providing MODNEXT 202. And, also included is mux 246 and mux 248 to process the eight bit LAST data for providing MODLAST 204. Mux 242 receives input data from the NEXT lines and selects two bit pixels according to select inputs S1 and S0. In this case, it is the MSB of the fraction in y accumulator register 98 which supplies YSEL to be used as the S1 input mux 242. The S0 select line, XSEL, is provided by the MSB of the fraction from x accumulator 110. In a similar manner, mux 246 receives input data from the LAST lines and selects two bit pixels according to select inputs S1 and S0. Also, it is the MSB of the fraction in y accumulator register 98 which supplies YSEL to be used as the S1 input of mux 246. The S0 select line, XSEL, is provided by the MSB of the fraction from x accumulator 110. As shown, mux 244 and mux 248 can select between the 2-D dual pixels or the full eight bit unmodified pixels depending on the value on MODE line 116. As for fractional multipliers, YFRACT 101 are fractional bits $F_{11}$-$F_0$ of register 98 when in 2-D dual mode and $F_{12}$-$F_1$ when in byte mode. XFRACT 113 are fractional bits $F_9$-$F_0$ of register 110 when in 2-D dual mode and $F_{10}$-$F_1$ when in byte mode. Shifter 203 provides the shifting of the fractional values from registers 98 and 110 to get the proper YFRACT and XFRACT values.

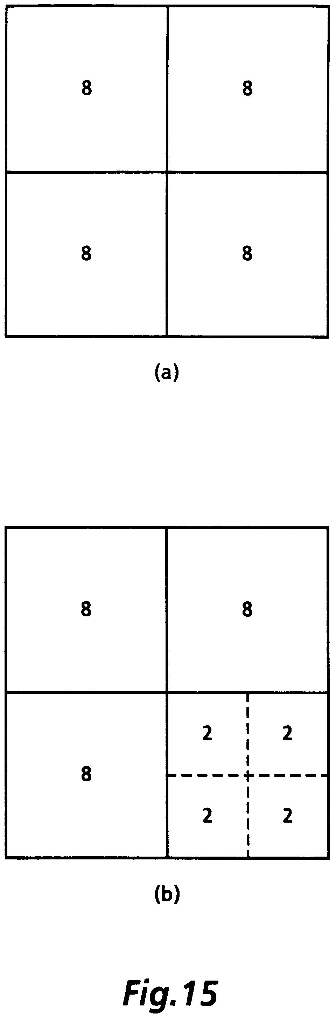

Figure 15 is a graphical representation showing how four eight bit pixels (byte mode) shown as (a) and three eight bit pixels (byte mode) and four two bit pixels (2-D dual mode) shown as (b) could be stored in the same amount of memory space. Therefore, it can be appreciated that switching between byte mode and 2-D dual mode could be done in during real-time processing given a mode selection signal. The advantage of course is that data segmented into different modes, having different gray depth and different two dimensional resolutions could be processed concurrently with no additional memory requirements.

Referring next to Figure 16 and Figure 17, shown are three more "modes" of storage and an example of circuitry used to implement these modes. In particular, Figure 16 includes Mode (1) which represents " y nibble mode" where two pixels, each having four bits of gray depth are stored in a given eight bit memory location. For data stored as y nibble mode, the resolution of the data in the slowscan direction in doubled assuming the size of the FIFO memory remains the same Mode (2) represents "y dual mode" where four, two bit pixels are stored in a given eight bit memory location. For data stored in y dual mode, the resolution of the data in the slowscan direction is four times greater assuming the size of the FIFO remains the same. And finally, Mode (3) represents "y binary mode" where eight, one bit pixels are stored in a given eight bit memory location. For data stored in binary mode, the resolution of the data in the slowscan direction is eight times greater assuming the FIFO memory size remains the same. As in the case of the previous modes, data stored using a combinations of modes can exist in the FIFO concurrently.

Figure 17 shows an example of circuitry used to implement the "y modes." To implement the y modes, the select lines S2, S1, and S0 need to be changed. Also, it is assumed that the image data provider packs tie pixels in each eight bit memory unit accordingly. In this case, it is y accumulator register 98 which provides the selection for selection circuitry 201. Selection circuitry 201 is identical with that described with reference to Figures 11 and 12 and is operated accordingly. The fractional portion of the number in register 98 has been increased to fifteen bits for this application. Fractional bit $F_{14}$, line 278, is used as select signal S2. In a similar manner, fractional bit $F_{13}$, line 276, is used as select line S1, and fractional bit $F_{12}$, line 272, is used as select line S0.

Figure 17 also shows the relationship between shifter 203 and y accumulator register 98. As shown, shifter 203 supplies the twelve bit YFRACT 101. All fifteen of the fractional bits $F_{14}$-$F_0$, are supplied to shifter 103 Depending on which mode is selected, twelve different bits of the fifteen will be shifted in place by shifter 203 and used as YFRACT 101. For byte mode, fractional bits $F_{14}$-$F_3$ will be shifted in place and used as YFRACT 101. For y nibble mode, fractional bits $F_{13}$-$F_2$ are used as XFRACT. For y dual mode, fractional bits $F_{12}$-$F_1$ are used as XFRACT And finally, for binary mode, fractional bits $F_{11}$-$F_0$ are used for XFRACT. If precision is not available to fill all fifteen positions in the fractional number, it is suggested that the lower, or least significant bits be loaded with zeros.

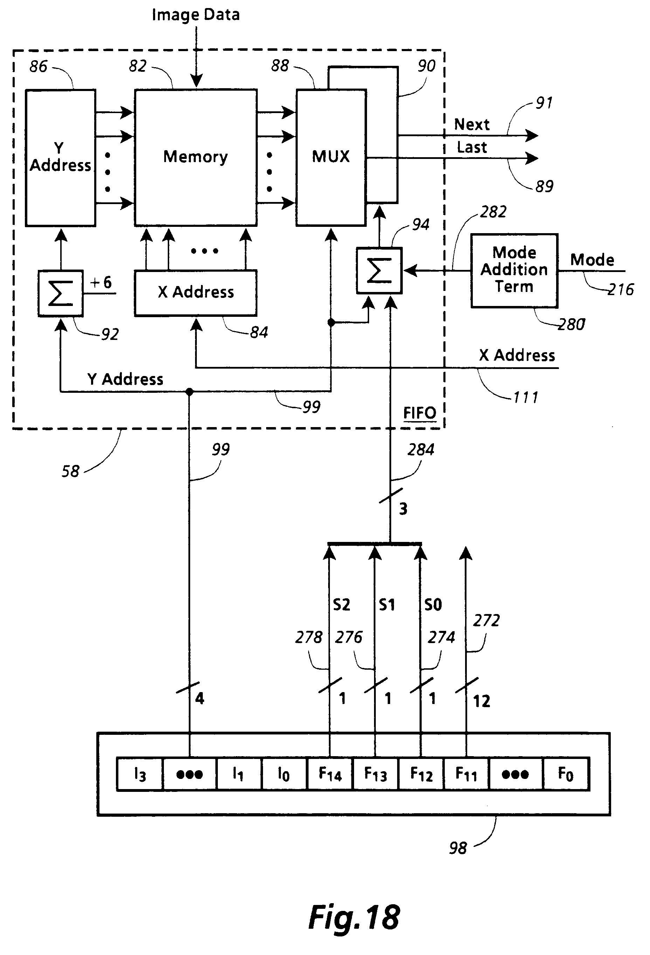

In the y direction, in addition to supplying new subpixel position information to the selection circuitry 201, S0 line 274, S1 line 276, and S2 line 278 must also be supplied to address the next raster in the FIFO memory. Figure 18 shows how the full adder 94 is modified to adjust the fractional distance of the NEXT raster from the LAST raster. Normally, this distance is 1 raster. However, in y nibble mode, the distance is 1/2 raster, in y dual mode the distance is 1/4 raster, and in y binary mode the distance is 1/8 raster. Therefore, mode addition term block 280 provides those values as a function of mode over connection 282 to full adder 94. As well as the integer portion of YADDRESS 99, full adder 94 receives fractional y positional information S0, S1, and S2 over connection 284, which results in a sum which determines the location of the next raster in the y direction. Note that even though fractional numbers are calculated in adder 94, only the integer portion of the result is used.

It can be appreciated that the circuitry described herein are just examples of circuitry which could be used to implement the functions of the variable mode storage and processing. Three different "circuits" have been shown to provide the nine different modes described. (The nine modes being byte, x nibble, x dual, x binary, 2-D dual, y nibble, y dual, and y binary.) This was done for clarity of explanation and is riot meant to be limiting. However, it should be pointed out that the circuitry as described herein can be combined in a system providing all nine modes, and combinations thereof.

In addition, as discussed in the background, it can be appreciated that the mode information can be embedded in the byte information in such a way that pictorial information can use 7 bits of depth, freeing the eight bit for switching in or out of pictorial mode, while 3 bits of depth can be used to address very precisely either horizontal or vertical edges at twice the resolution depending on the setting of the free seventh bit, switching in and out of x nibble mode or y nibble mode. These modifications to the circuitry are considered trivial and will not be discussed further.

Furthermore, the description with respect to Figures 8 through 18 assumes that the FIFO memory size remains the same and various modes are used to increase the resolution. However, if decreasing the FIFO memory size, but keeping resolution the same is a priority, the various modes can be implemented by using the three least significant bits of the integer portions of registers 98 and 110 as the select lines in to the selection circuitry. Of course, it would then be the integer, or address bits that would have to be shifted accordingly, as opposed to the fractional bits. In that case, the same number of pixels can be stored in the FIFO but the FIFO could be reduced by one half if using only nibble mode, one fourth if using only dual mode and one eight if using only binary mode. Again, any combination of the nine modes described above could be implemented. In general, any bits from registers 98 or 110 could be used as select bit as long as the bits needed to create the XADDRESS, YADDRESS, XFRACT and YFRACT were shifted into place accordingly.

In conclusion, the above disclosure described a system which provides a means for generating gray output data, where the gray output data used to drive a gray modulator for any type of writing engine which prints with binary output. For text, lineart and halftones, this system positions the edges of these features with a precision finer than the smallest resolution unit in both the slowscan and the fastscan directions, while rendering the best binary contrast possible. Furthermore, the system provides for storage and processing of image data having different gray depths and different resolutions which are easily selectable while printing a given page.

## Claims

1. An image processing system for processing variable resolution data, comprising:

   data source for supplying image data and associated mode information wherein said mode information controls variable resolutions of said image data when processed;

memory device for receiving and storing said image data and said associated mode information in a packed format according to said associated mode information; and

mode selection device for receiving said image data and said associated mode information from said memory device and for unpacking said image data in response to said mode information.

2. An image processing system for processing variable resolution data, comprising:

data source for supplying image data and associated mode information wherein said mode information controls variable resolutions of said image data when processed, said data source providing said image data in blocks, each of said blocks of image data including one or more packed pixels wherein each packed pixel includes a number of gray levels, wherein the number of said packed pixels in said blocks and said number of gray levels for each of said packed pixels depends on said associated mode information;

memory device for receiving and storing said image data and said associated mode information in a packed format according to said associated mode information, said memory device having plural storage locations where each of said plural storage locations stores each of said blocks of image data from said data source, each of said storage locations includes a maximum number of bits; and

mode selection device for receiving said image data and said associated mode information from said memory device and for unpacking said image data in response to said mode information, said mode selection device transforming said packed pixels into unpacked pixels wherein each of said unpacked pixels has a number of bits equivalent to said maximum number of bits in said storage location.

3. An image processing system according to claim 2, wherein said associated mode information is changeable for each of said storage locations.

4. An image processing system according to any of the preceding claims wherein said variable resolutions are in a fastscan direction.

5. An image processing system according to any of claims 1 to 3 wherein said variable resolutions are in a slowscan direction.

6. A hyperacuity printing system for rendering intensity modulated image data on a photosensitive recording medium, comprising:

a data source for supplying grayscale input image data;

a scanning device for rendering grayscale output image data, said scanning device having a writing device for writing scan spots on said recording medium;

transformation circuitry for transforming said grayscale input image data into grayscale output image data, said transformation circuitry including a halftoner, a thresholder, a mode selector, and a selection device, where said selection device selects either said thresholder or said halftoner to provide said grayscale output image data, said selection device also provides a mode selection to said mode selector; and,

a modulating device coupled between said transformation circuitry and said scanning device for intensity modulating each of said scan spots in accordance with said grayscale output image data.

7. A hyperacuity printing system according to claim 6 wherein said mode selector provides first data to said thresholder and second data to said halftoner, said first data being at a higher resolution than said second data.

8. A printing system according to claim 6 or 7 wherein said mode selection can change between any two pixels.

9. A hyperacuity printing system according to claim 6, 7 or 8 wherein said transformation circuitry further includes a memory device for storing at least two consecutive lines of said grayscale input data.

10. A hyperacuity printing system for rendering image data on a photosensitive recording medium, said image data being rendered as an array of pixels across said photosensitive recording medium in a fastscan direction, and an orthogonal slowscan direction, comprising:

a data source for supplying grayscale input image data;

a plurality of image processing channels, each channel including:

a scanning device for writing grayscale output image data onto said recording medium, said scanning device having a writing device for writing scan spots on said recording medium;

transformation circuitry for transforming said grayscale input image data into grayscale output image data, said transformation circuitry including a halftoner, a thresholder, a mode selector, and a selection device, where said selection device selects either said thresholder or said halftoner to provide said grayscale output image data, said selection device also provides a mode selection to said mode selector; and,

a modulating device coupled between said transformation circuitry and said scanning device for intensity modulating each of said scan spots in accordance with said grayscale output image data.

Data Source — 23

Bit Clock

Intensity Modulator — 28

Laser Diode — 15

Pre-Scan Optics — 25

Post-Scan Optics — 26

Motor — 21

17, 18, 22, 12, 13, 24, 14, 23, 11

**Fig. 1**

**Fig. 2**

EP 0 654 937 A2

**Fig. 3**

Image Generator 51

FIFO 58

Segmenter 62

Resampling Interpolator 60

Phase/ Resolution Controller 66

Interlace Formatter 80

Linearity and Registration Controller 78

Thresholder 68

Dot Generator 72

Screen Generator 74

Halftoner 70

D/A Converter 76

Laser Diode 15

Phase/ Resolution Controller 66

Linearity and Registration Controller 78

FIFO 58

Resampling Interpolator 60

Segmenter 62

Dot Generator 72

Screen Generator 74

Halftoner 70

Laser Diode 15

Thresholder 68

D/A Converter 76

64

85

EP 0 654 937 A2

Image Data

*Fig. 4*

**Fig. 5**

*Fig. 6*

23

**Fig. 7**

EP 0 654 937 A2

**Fig. 8**

EP 0 654 937 A2

Byte Mode
(1)

X Nibble Mode
(2)

X Dual Mode
(3)

X Binary Mode
(4)

2-D Dual Mode
(5)

*Fig. 9*

*Fig.13*

26

Fig.10

EP 0 654 937 A2

**Fig.11**

**Fig.12**

Next (7) — D1 — Y1
Next (6) — D0 — Y0
Next (5) — C1
Next (4) — C0
Next (3) — B1
Next (2) — B0
Next(1) — A1
Next(0) — A0
S1 S0
S2
S1
252 250
242

C7
C6
C5-C0
Modnext
8
202
Next (7:0)
91 8
Mode
S
244
216

Last (7) — D1 — Y1
Last (6) — D0 — Y0
Last (5) — C1
Last (4) — C0
Last (3) — B1
Last (2) — B0
Last (1) — A1
Last (0) — A0
S1 S0
S2
S1
252 250
230
246

C7
C6
C5-C0
Modlast
8
204
Last (7:0)
89 8
Mode
S
248
216

Shifter
203
YFract
12
101
250
YSEL
1
12
YAddress
99
4
98
I₃ ••• I₁ I₀ F₁₂ F₁₁ ••• F₀

Shifter
203
XFract
12
113
252
XSEL
1
10
XAddress
111
14
110
I₁₃ ••• I₁ I₀ F₁₁ F₉ ••• F₀

260
Bits 0,1 | Bits 2,3
262 | 264
Bits 4,5 | Bits 6,7
266 | 268
2-D Dual Mode

240

*Fig.14*

(a)

(b)

*Fig.15*

Y Nibble Mode
(1)

Y Dual Mode
(2)

Y Binary Mode
(3)

**Fig.16**

**Fig.17**

**Fig.18**